# FASCICULE DE BREVET EUROPEEN

(11) **EP 2 066 537 B1**
(45) Date de publication et mention de la délivrance du brevet: **06.06.2012**
(21) Numéro de dépôt: 07820504.4
(22) Date de dépôt: 24.09.2007
(51) Int. Cl.: B60S 1/16, H02K 7/08

(54) **MECANISME D'ENTRAINEMENT COMPORTANT DES MOYENS DE GUIDAGE D'UN ARBRE D'ENTRAINEMENT**
MITTEL ZUR FÜHRUNG EINER ANTRIEBSWELLE UMFASSENDER ANTRIEBSMECHANISMUS
DRIVE MECHANISM COMPRISING MEANS FOR GUIDING A DRIVE SHAFT

(30) Priorité: 27.09.2006 FR 0608465
(43) Date de publication de la demande: 10.06.2009
(73) Titulaire: Valeo Systèmes d'Essuyage, 78321 La Verrière (FR)
(72) Inventeur: LORIN Hervé, 86000 Poitiers (FR); DESHOUILLIERS Philippe, 86300 Chauvigny (FR); DANJOU Jean-Paul, 86100 Chatellrault (FR); SERVIN Alain, 86380 Vendeuvre (FR)
(74) Mandataire: Rosolen-Delarue, Katell
(86) Numéro de dépôt international: PCT/EP2007/060097
(87) Numéro de publication internationale: WO 2008/037687

(56) Documents cités:
- DE-A1- 10 242 570
- FR-A1- 2 408 935
- US-A- 5 089 736

## Description

L'invention propose un mécanisme d'entraînement d'un balai d'essuyage comportant des moyens de guidage en rotation d'un arbre d'entraînement coaxialement à un axe de rotation.

L'invention propose plus particulièrement un mécanisme d'entraînement d'un balai d'essuyage qui comporte un socle de support, un moteur d'entraînement monté sur le socle, comportant une carcasse de support d'un stator du moteur qui est fixée au socle et comportant un arbre d'entraînement qui est monté mobile en rotation autour d'un axe principal A globalement horizontal par rapport à la carcasse et par rapport au socle, des moyens de guidage en rotation de l'arbre d'entraînement autour de l'axe horizontal A par rapport au socle et par rapport à la carcasse, comportant un premier palier de guidage de l'arbre par rapport au socle et un deuxième palier de guidage de l'arbre par rapport à la carcasse.

L'arbre d'entraînement est formé de deux parties, une première partie arrière portant le rotor du moteur, qui est agencée à l'intérieur de la carcasse, et une deuxième partie avant qui comporte une vis sans fin d'un engrenage à roue et vis sans fin pour l'entraînement d'un bras d'essuyage en mouvement de balayage alterné.

De manière connue, les moyens pour le guidage en rotation de l'arbre d'entraînement comportent deux paliers qui sont montés sur l'arbre de part et d'autre de la première partie ou bien de part et d'autre de la vis sans fin.

Lorsque les paliers sont agencés de part et d'autre de la vis sans fin, la partie arrière de l'arbre n'est pas maintenue radialement par rapport au socle et par rapport à la carcasse. Ainsi, lors du fonctionnement du moteur, un défaut d'équilibrage du rotor produit un balourd important et par conséquent des vibrations importantes dans la totalité du mécanisme d'entraînement.

Lorsque les paliers sont agencés de part et d'autre du rotor du moteur, le balourd du rotor est limité. Cependant, selon ce mode, la partie avant de l'arbre n'est alors pas maintenue radialement et elle peut alors subir une flexion importante, notamment en cas d'une forte charge transmise à la vis sans fin par l'intermédiaire de la roue associée.

Il y a alors un risque que la roue se désengrène d'avec la vis sans fin, provoquant alors un décalage du mécanisme d'essuyage, et par conséquent, un mauvais essuyage.

De plus, les tolérances géométriques concernant la coaxialité de l'arbre d'entraînement par rapport à un axe principal longitudinal A sont relativement réduites, ce Document FR-A-2408935 montre un mécanisme tel que décrit dans le préambule de la revendication 1, ce qui pose des difficultés lors du montage de la carcasse du moteur sur le socle.

L'invention a pour but de proposer un mécanisme d'entraînement comportant des moyens de guidage en rotation de l'arbre d'entraînement, permettant de limiter les conséquences de ces problèmes.

Dans ce but, l'invention propose un mécanisme d'entraînement tel que décrit précédemment, caractérisé en ce que les moyens de guidage comportent un troisième palier monté sur le socle, qui est réalisé de manière à permettre un positionnement de l'arbre d'entraînement coaxialement à l'axe horizontal, A, lors du montage du moteur sur le socle, et en ce que ledit troisième palier n'est pas en contact avec l'arbre lorsque le moteur est monté sur le socle.

Selon d'autres caractéristiques de l'invention, prises isolément ou en combinaison :
- le troisième palier est monté mobile axialement par rapport à l'arbre depuis une position de montage initiale dans laquelle le troisième palier coopère avec le premier palier pour positionner l'arbre coaxialement à l'axe principal horizontal A, vers une position finale dans laquelle ledit troisième palier n'est pas en contact avec l'arbre ;
- le troisième palier comporte une portion qui est apte à venir en contact radialement avec la face cylindrique de l'arbre lorsque le palier est dans la position de montage initiale, pour le positionnement de l'arbre coaxialement à l'axe principal horizontal, et qui est séparée de l'arbre lorsque le troisième palier est en position finale ;
- le troisième palier comporte un tronçon annulaire dont le diamètre interne est supérieur au diamètre externe de la face cylindrique de l'arbre, et comporte une bague radiale qui fait saillie radialement vers l'intérieur par rapport au tronçon annulaire et dont le diamètre interne de la bague est globalement égal au diamètre externe de la face cylindrique de l'arbre ;
- la face cylindrique de l'arbre comporte une gorge radiale, et la bagne du troisième palier est située axialement au niveau de ladite gorge lorsque le troisième palier est dans la position finale ;
- le troisième palier est situé axialement au niveau d'une extrémité axiale avant de l'arbre de manière que la bague est située axialement en avant de l'extrémité avant de l'arbre lorsque le troisième palier est dans la position finale ;
- le troisième palier et/ou le socle comporte des moyens pour le maintien du troisième palier en position finale.

L'invention propose aussi un procédé d'assemblage d'un mécanisme d'entraînement selon l'une quelconque des revendications précédentes, comportant un socle de support , un moteur d'entraînement et des paliers de guidage de l'arbre du moteur d'entraînement par rapport au socle et par rapport à une carcasse du moteur, caractérisé en ce que le procédé comporte :
- une première étape de positionnement du moteur par rapport au socle par l'intermédiaire des paliers de guidage, de manière que l'arbre du moteur est positionné par rapport au socle, coaxialement à un axe principal longitudinal, par l'intermédiaire de deux paliers de guidage ;
- une étape de fixation de la carcasse du moteur sur le socle ; et
- une étape de déplacement de l'un desdits deux paliers, de minière qu'à l'issue de l'étape de déplacement, l'arbre est guidé par rapport au socle par l'intermédiaire d'un premier palier, et l'arbre est guidé par rapport à la carcasse du moteur par l'intermédiaire d'un deuxième palier.

Selon d'autres caractéristiques du procédé selon l'invention, l'étape de déplacement consiste en un coulissement axial du troisième palier par rapport au socle et par rapport à l'arbre.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en section axiale d'un mécanisme d'entraînement comportant des moyens de guidage selon l'invention ;
- la figure 2A est un détail à plus grande échelle du troisième palier selon l'invention, dans laquelle le troisième palier est en position de montage initiale ;
- la figure 2B est une vue similaire à celle de la figure 2, dans laquelle le troisième palier est en position finale ;
- la figure 3A est une vue similaire à celle de la figure 2, montrant un troisième palier selon une variante de réalisation de l'invention ;
- la figure 3B est une vue similaire à celle de la figure 3, représentant le troisième palier représenté à la figure 4, dans la position finale.

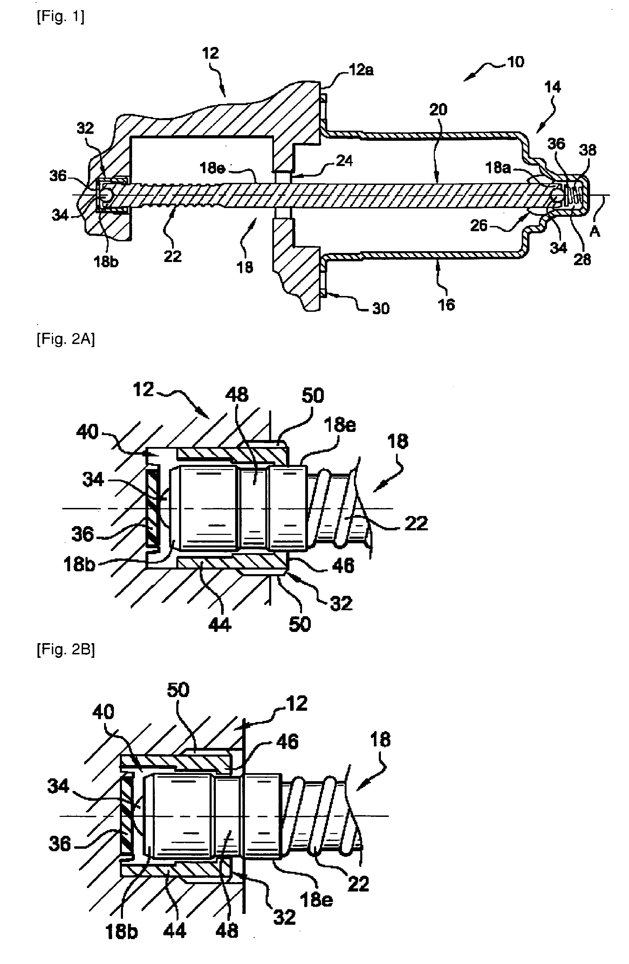

Pour la description de l'invention, on adoptera à titre non limitatif l'orientation d'avant en arrière comme étant la direction longitudinale et de gauche à droite en se reportant à la figure 1.

Dans la description qui va suivre, des éléments identiques, similaires ou analogues seront désignés par les mêmes chiffres de référence.

On a représenté à la figure 1 un mécanisme d'entraînement 10 pour un balai d'essuyage (non représenté) d'un panneau vitré de véhicule automobile, qui comporte un socle 12 de support, qui est monté sur un élément de structure de caisse (non représenté) du véhicule, et qui porte notamment un moteur 14 d'entraînement du balai.

Le moteur 14 comporte principalement une carcasse 16 de montage du moteur 14 sur le socle 12, qui porte un stator (non représenté) du moteur 14 et il comporte un arbre d'entraînement 18 qui porte le rotor (non représenté) du moteur 14.

L'arbre 18 s'étend globalement horizontalement, vers l'avant depuis la carcasse 16 du moteur 14, de manière qu'une partie arrière 20 de l'arbre 18 porte le rotor du moteur 14 et est agencée à l'intérieur de la carcasse 16, et une partie avant 22 de l'arbre 18 s'étend en avant de la carcasse 16, et forme une vis sans fin apte à coopérer avec une roue (non représentée) d'un réducteur pour l'entraînement d'un bras d'essuyage en mouvement de balayage alterné.

L'arbre 18 est guidé en rotation autour de son axe principal A horizontal par rapport au socle 12 et par rapport à la carcasse 16 par l'intermédiaire de moyens de guidage, comportant un premier palier 24 de guidage de l'arbre 18 par rapport au socle 12 et un deuxième palier 26 de guidage de l'arbre 18 par rapport à la carcasse 16.

Le premier palier 24 est agencé axialement le long de l'axe principal A de l'arbre 18, entre la première partie 20 et la deuxième partie 22 de l'arbre 18 et il est porté par le socle 12.

Le deuxième palier 26 est agencé axialement au niveau de l'extrémité axiale arrière 18a de l'arbre 18, dans un logement d'extrémité arrière 28 associé qui est réalisé dans la carcasse 16.

Le deuxième palier 26 est ici du type sphérique, pour s'adapter à un défaut de coaxialité entre le logement arrière 28 et le premier palier 24.

Les moyens de guidage comportent aussi des moyens formant butée axiale de l'arbre 18 par rapport au socle 12 et par rapport à la carcasse 16, qui consistent en une bille 34 portée par chaque extrémité axiale 18a, 18b de l'arbre 18, qui est apte à venir axialement en butée contre une pastille 36 en vis-à-vis, représentée notamment aux figures 2A et 2B, qui est portée par le socle 12 et par la carcasse 16.

Un ressort axial de compression 38 est agencé dans le logement arrière 28 de la carcasse 16, pour supprimer tout jeu axial de l'arbre 18 par rapport au socle 12 et par rapport à la carcasse 16.

La carcasse 16 comporte une collerette radiale 30 pour son montage sur une face 12a en vis a vis, d'orientation radiale par rapport à l'axe principal horizontal, A du socle 12.

Le positionnement de la carcasse 16 sur le socle 12 est réalisé par l'intermédiaire de l'arbre 18, qui est positionné coaxialement à l'axe principal horizontal A par les moyens de guidage.

A cet effet, selon l'invention, les moyens de guidage comportent un troisième palier 32 qui est agencé axialement au niveau de l'extrémité axiale avant de l'arbre 18 et qui est porté par le socle 12.

Comme on peut le voir plus en détails à la figure 2A, le troisième palier 32 est monté dans un logement 40 d'extrémité avant du socle 12, et il comporte une bague radiale 46 dont le diamètre interne est globalement égal au diamètre de la face cylindrique 18e de l'arbre 18.

Le premier palier 24 et le troisième palier 32 sont coaxiaux à l'axe principal horizontal A.

Ainsi, lors du montage du moteur 14 sur le socle 12, le premier palier 24 et le troisième palier 32 coopèrent avec l'arbre 18 pour le positionnement de l'arbre 18 coaxialement à l'axe principal horizontal A.

La collerette 30 de la carcasse 16 ne comporte aucun moyen pour son positionnement par rapport à la face 12a en vis-à-vis du socle 12, ce qui permet de positionner la carcasse 16 par rapport au socle 12 par l'intermédiaire du premier palier 24 et du troisième palier 32 uniquement.

Lorsque la carcasse 16 est en position par rapport au socle 12, elle est alors fixée au socle 12 par des moyens conventionnels, par exemple par vissage.

Le troisième palier 32 permet ainsi de monter le moteur 14 sur le socle 12 de façon que la carcasse 16 est positionnée postérieurement au positionnement de l'arbre 18 coaxialement à l'axe principal A horizontal.

Cela permet ainsi de compenser les défauts de perpendicularité de la collerette 30 de la carcasse et de la face 12a du socle 12 en vis-à-vis par rapport à l'axe principal horizontal A.

Cependant, lorsque la carcasse 16 est fixée au socle 12, les moyens de guidage en rotation de l'arbre 18 par rapport à l'ensemble formé par le socle 12 et la carcasse 16, forment un montage hyperstatique pouvant induire des contraintes mécaniques sur l'arbre 18, le socle 12 et/ou la carcasse 16.

C'est pourquoi, selon l'invention, le troisième palier 32 est réalisé de manière que lorsque le moteur 14 est monté sur le socle 12, c'est-à-dire lorsque la carcasse 16 est fixée au socle 12, un jeu radial est présent entre l'arbre 18 et le troisième palier 32.

Le troisième palier 32 n'est alors plus en contact avec l'arbre 18 et l'arbre 18 est alors guidé en rotation uniquement par l'intermédiaire du premier palier 24 et le deuxième palier 26.

Pour cela, comne on peut le voir aux figures 2A et 2B, le troisième palier 32 est monté mobile par rapport au socle 12 et par rapport à l'arbre 18 depuis une position initiale de montage représentée à la figure 2A permettant le positionnement de l'arbre 18 lors du montage du moteur 14 sur le socle 12, vers une position finale dans laquelle le troisième palier 32 n'est plus en contact avec la face cylindrique 18e de l'arbre 18.

Ici, le déplacement du troisième palier 32 consiste en un coulissement axial vers l'avant du palier 32 dans le logement 40 du socle 12, jusqu'à ce que le troisième palier 32 soit en butée axialement vers l'avant contre le fond du logement 40.

Le troisième palier 32 comporte un premier tronçon cylindrique 44 coaxial à l'axe principal A horizontal, dont le diamètre interne est supérieur au diamètre de la face cylindrique 18e de l'arbre 18. Ce premier tronçon cylindrique 44 est agencé en vis-à-vis de l'extrémité avant 18b de l'arbre 18 lorsque le troisième palier 32 est en position finale.

Le troisième palier 32 comporte un deuxième tronçon annulaire 46 formant la bague, qui est coaxial à l'axe principal A horizontal, qui fait saillie radialement vers l'intérieur par rapport au premier tronçon 44, et dont le dianètre interne est globalement égal au diamètre de la face cylindrique 18e de l'arbre 18.

La bague 46 est ainsi utilisée lors du positionnement de l'arbre 18 coaxialement à l'axe principal A horizontal de sorte que sa face cylindrique interne vienne en contact avec la face cylindrique 18e de l'arbre 18 lorsque le troisième palier 32 est dans la position initiale de montage représentée à la figure 2A.

Par contre, pour que le guidage de l'arbre 18 ne soit pas hyperstatique lors du fonctionnement du mécanisme d'entraînement 10, la bague 46 est réalisée de manière que son contact avec la face cylindrique 18e de l'arbre 18 soit rompu lorsque le troisième palier 32 est dans sa position finale représentée à la figure 2B.

L'invention propose aussi un procédé pour l'assemblage du mécanisme d'essuyage selon l'invention qui vient d'être décrit précédemment.

Le procédé comporte une première étape de positionnement de la carcasse du moteur 14 sur le socle 12 de manière que l'arbre 18 soit positionné coaxialement à l'axe principal horizontal A.

Comme on l'a dit précédemment, le positionnement de l'arbre 18 est réalisé par l'intermédiaire du premier palier 24 et par l'intermédiaire du troisième palier 32 qui sont coaxiaux à l'axe principal horizontal A.

Le positionnement de l'arbre 18 coaxialement à l'axe principal horizontal A permet de positionner la carcasse 16 du moteur 14 par rapport au socle 12.

A l'issue de cette première étape de positionnement, la carcasse 16 est positionnée par rapport au socle de manière que l'arbre 18 est coaxial à l'axe principal horizontal A et sa collerette 30 est en appui contre la face 12a en vis-à-vis du socle 12.

Le procédé d'assemblage selon l'invention comporte une deuxième étape de fixation du moteur 14 sur le socle 12, ici par vissage de la collerette 30 de la carcasse 16 sur le socle 12.

Postérieurement à l'étape de fixation, le procédé d'assemblage comporte une étape de déplacement du troisième palier 32 par un coulissement longitudinalement vers l'avant par rapport au socle 12 et par rapport à l'arbre 18.

A l'issue de cette étape de déplacement, et conformément à l'invention le troisième palier 32 n'est pas en contact avec l'arbre 18, l'arbre 18 est alors guidé en rotation par rapport au socle 12 autour de l'axe principal horizontal A uniquement par l'intermédiaire du premier palier 24 et par l'intermédiaire du deuxième palier 26.

On a représenté aux figures 2A et 2B un premier mode de réalisation de l'invention permettant à la bague de ne pas être en contact avec la face cylindrique 18e de l'arbre 18 lorsque le troisième palier 32 est en position finale.

Selon ce premier mode de réalisation, la face cylindrique 18e de l'arbre 18 comporte une gorge radiale 48 qui est située à proximité de l'extrémité avant 18b de l'arbre 18 de manière que lorsque le troisième palier 32 est en position finale, comme on peut le voir à la figure 2B, la bague 46 est située axialement en vis-à-vis de la gorge radiale 48.

Ainsi, lorsque le troisième palier 32 est en position initiale, la bague 46 est située axialement en arrière de la gorge radiale 48 et la face cylindrique interne de la bague 46 est en contact avec la face cylindrique 18e de l'arbre 18 pour réaliser le positionnement de l'arbre 18 par rapport au socle 12.

Ensuite, lorsque le troisième palier 32 est en position finale, la face cylindrique interne de la bague 46 est située axialement en vis-à-vis et radialement à distance du fond de la gorge radiale 48. L'extrémité avant 18b de l'arbre n'est alors pas en contact avec le troisième palier 32.

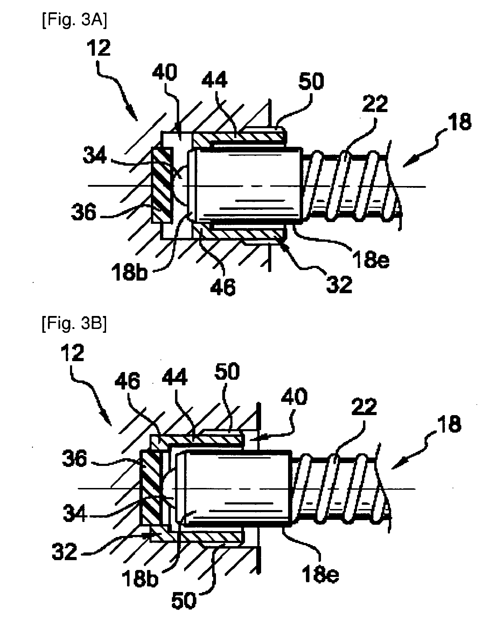

On a représenté aux figures 3A et 3B un deuxième mode de réalisation de l'invention permettant de n'avoir aucun contact de la bague 46 avec la face cylindrique 18e de l'arbre 18 lorsque le troisième palier 32 est en position finale.

La bague 46 est à cet effet située axialement en avant du tronçon cylindrique 44 du troisième palier 32.

Ainsi, lorsque le troisième palier 32 est en position initiale de montage représentée à la figure 3A, la face cylindrique interne de la bague 46 est en contact avec la face cylindrique 18e de l'arbre 18, pour réaliser le positionnement de l'arbre 18 coaxialement à l'axe principal A horizontal, conformément au premier aspect de l'invention.

Ensuite, lorsque le troisième palier 32 a été déplacé vers la position finale représentée à la figure 3B, conformément au deuxième aspect de l'invention, la bague 46 est décalée axialement vers l'avant par rapport à l'extrémité avant 18b de l'arbre 18, de manière que sa face cylindrique interne ne soit pas en contact avec la face cylindrique 18e de l'arbre 18.

Selon ce mode de réalisation, seul le tronçon cylindrique 44 du troisième palier 32 est situé radialement en vis-à-vis de l'extrémité avant 18b de l'arbre 18 lorsque le troisième palier 32 est en position finale.

De plus, lorsque le troisième palier 32 est en position finale représentée à la figure 3B, c'est-à-dire en butée axialement vers l'avant contre le fond du logement 40, comme on l'a dit plus haut, la bague 46 est située axialement au niveau de la pastille 36 associée.

La bague 46 permet alors de maintenir la pastille en position coaxialement à l'axe principal horizontal A.

Selon une variante de réalisation (non représentée) de l'un ou l'autre des deux modes de réalisation qui viennent d'être décrits, le diamètre extérieur de la pastille 36 qui est située au niveau de l'extrémité avant 18b de l'arbre 18, est supérieur au diamètre intérieur de la portion 44, 46 du troisième palier 32 qui est situé axialement en avant du troisième palier 32.

Ainsi, lorsque le troisième palier 32 est en position finale, il appuie axialement vers l'avant contre la pastille 36, ce qui permet d'immobiliser axialement la pastille 36 dans le fond du logement 40 et en rotation autour de l'axe principal horizontal A.

Lorsque la bague 46 est située dans la partie arrière du troisième palier 32, comme représenté aux figures 2A et 2B, c'est alors le tronçon cylindrique 44 du troisième palier 32 qui appuie axialement sur la pastille 36.

Par contre, lorsque la bague 46 est située dans la partie avant du troisième palier 32, comme représenté aux figures 3A et 3B, c'est la bague 46 qui appuie axialement sur la pastille 36.

Selon l'invention, et canne on l'a dit plus haut, lorsque le troisième palier 32 est en position finale représentée aux figures 2B et 3B, la face cylindrique interne du tronçon cylindrique 44 du troisième palier 32 est situé radialement en vis-à-vis et à distance de la face cylindrique de l'extrémité avant 18b de l'arbre 18.

Cela permet d'une part d'obtenir un assemblage isostatique pour le guidage en rotation de l'arbre 18, et cela permet aussi de limiter l'amplitude en flexion de la partie avant 22 de l'arbre 18, lorsqu'elle est soumise à une charge importante provenant de la roue associée.

Une telle limitation de l'amplitude en flexion de la partie avant de l'arbre 18 permet de réduire les risques de désengrènement de la roue associée à la vis sans fin.

En effet, lorsque la partie avant 22 de l'arbre fléchit radialement, l'extrémité avant 18b de l'arbre 18 vient en butée radialement contre la face cylindrique interne du tronçon cylindrique 44 du troisième palier 32.

De plus, le troisième palier 32 est réalisé dans un matériau permettant de limiter les frottements avec l'extrémité avant 18b de l'arbre 18, pour que le contact de l'extrémité avant 18b de l'arbre avec le troisième palier 32 ne nuise pas à l'efficacité du mécanisme d'entraînement 10.

Selon encore un autre aspect de l'invention, le troisième palier 32 et le socle 12 comportent des moyens pour le maintien du troisième palier 32 en position finale représentée aux figures 2B et 3B.

Ici, les moyens de maintien en position comportent des dents 50 qui s'étendent radialement vers l'extérieur depuis la face cylindrique externe du troisième palier 32, qui pénètrent dans la matière du socle 12 délimitant le logement 40, de sorte que le troisième palier soit serti dans le logement 40 associé.

## Revendications

1. Mécanisme d'entraînement (10) d'un balai d'essuyage qui comporte :
- un socle (12) de support ;
- un moteur (14) d'entraînement monté sur le socle (12), comportant une carcasse (16) de support d'un stator du moteur (14) qui est fixée au socle (12) et comportant un arbre (18) d'entraînement qui est monté mobile en rotation autour d'un axe principal (A) globalement horizontal par rapport à la carcasse (16) et par rapport au socle (12) ;
- des moyens de guidage en rotation de l'arbre (18) d'entraînement autour de l'axe horizontal (A) par rapport au socle (12) et par rapport à la carcasse (16), comportant un premier palier (24) de guidage de l'arbre (18) par rapport au socle (12) et un deuxième palier (26) de guidage de l'arbre (18) par rapport à la carcasse (16),
**caractérisé en ce que** les moyens de guidage comportent un troisième palier (32) monté sur le socle (12), qui est réalisé de manière à permettre un positionnement de l'arbre (18) d'entraînement coaxialement à l'axe horizontal (A), lors du montage du moteur (14) sur le socle (12), et **en ce que** ledit troisième palier (32) n'est pas en contact avec l'arbre (18) lorsque le moteur (14) est monté sur le socle (12).

2. Mécanisme d'entraînement (10) selon la revendication précédente, **caractérisé en ce que** le troisième palier (32) est monté mobile axialement par rapport à l'arbre (18) depuis une position de montage initiale dans laquelle le troisième palier (32) coopère avec le premier palier (24) pour positionner l'arbre (18) coaxialement à l'axe principal horizontal (A), vers une position finale dans laquelle ledit troisième palier (32) n'est pas en contact avec l'arbre (18).

3. Mécanisme d'entraînement (10) selon la revendication précédente, **caractérisé en ce que** le troisième palier (32) comporte une portion (46) qui est apte à venir en contact radialement avec la face cylindrique (18e) de l'arbre (18) lorsque le palier (32) est dans la position de montage initiale, pour le positionnement de l'arbre (18) coaxialement à l'axe principal horizontal, et qui est séparée de l'arbre (18) lorsque le troisième palier (32) est en position finale.

4. Mécanisme d'entraînement (10) selon la revendication précédente, **caractérisé en ce que** le troisième palier (32) comporte un tronçon annulaire (44) dont le diamètre interne est supérieur au diamètre externe de la face cylindrique de l'arbre (18), et comporte une bague radiale (46) qui fait saillie radialement vers l'intérieu- par rapport au tronçon annulaire (44) et dont le diamètre interne de la bague est globalement égal au diamètre externe de la face cylindrique (18e) de l'arbre (18).

5. Mécanisme d'entraînement (10) selon la revendication précédente, **caractérisé en ce que** la face cylindrique (18e) de l'arbre (18) comporte une gorge radiale (48), et **en ce que** la bague (46) du troisième palier (32) est située axialement au niveau de ladite gorge (48) lorsque le troisième palier (32) est dans la position finale.

6. Mécanisme d'entraînement (10) selon la revendication 4, **caractérisé en ce que** le troisième palier (32) est situé axialement au niveau d'une extrémité axiale avant (18b) de l'arbre (18) de manière que la bague (46) est située axialement en avant de l'extrémité avant de l'arbre (18) lorsque le troisième palier (32) est dans la position finale.

7. Mécanisme d'entraînement (10) selon l'une quelconque des revendications 2 à 6, **caractérisé en ce que** le troisième palier (32) et/ou le socle (12) comporte des moyens (50) pour le maintien du troisième palier (32) en position finale.

8. Procédé d'assemblage d'un mécanisme d'entraînement (10) selon l'une quelconque des revendications précédentes, comportant un socle de support (12), un moteur d'entraînement (14) et des paliers (24, 26, 32) de guidage de l'arbre (18) du moteur d'entraînement (14) par rapport au socle (12) et par rapport à une carcasse (16) du moteur (14), **caractérisé en ce que** le procédé comporte :
- une première étape de positionnement du moteur (14) par rapport au socle (12) par l'intermédiaire des paliers (24, 26, 32) de guidage, de manière que l'arbre (18) du moteur (14) est positionné par rapport au socle (12), coaxialement à un axe principal longitudinal (A), par l'intermédiaire de deux paliers de guidage (24, 32) ;
- une étape de fixation de la carcasse (16) du moteur (14) sur le socle (12) ; et
- une étape de déplacement de l'un (32) desdits deux paliers (24, 32), de manière qu'à l'issue de l'étape de déplacement, l'arbre (18) est guidé par rapport au socle (12) par l'intermédiaire d'un premier palier (24), et l'arbre (18) est guidé par rapport à la carcasse (16) du moteur (14) par l'intermédiaire d'un deuxième palier (26).

9. Procédé selon la revendication précédente, **caractérisé en ce que** l'étape de déplacement consiste en un coulissement axial du troisième palier (32) par rapport au socle (12) et par rapport à l'arbre (18).

## Claims

1. Drive mechanism (10) for a wiper which comprises:
- a supporting mount (12);
- a drive motor (14) mounted on the mount (12), comprising a field frame (16) supporting a stator of the motor (14) which is fixed to the mount (12) and comprises a drive shaft (18) which is mounted with the ability to rotate about a generally horizontal main axis (A) with respect to the field frame (16) and with respect to the mount (12);
- means for guiding the rotation of the drive shaft (18) about the horizontal axis (A) with respect to the mount (12) and with respect to the field frame (16), comprising a first guide bearing (24) that guides the shaft (18) with respect to the mount (12) and a second guide bearing (26) that guides the shaft (18) with respect to the field frame (16),
**characterized in that** the guide means comprise a third bearing (32) mounted on the mount (12), which is produced in such a way as to allow the drive shaft (18) to be positioned coaxial with the horizontal axis (A) as the motor (14) is mounted on the mount (12), and **in that** the said third bearing (32) is not in contact with the shaft (18) when the motor (14) is mounted on the mount (12).

2. Drive mechanism (10) according to the preceding claim, **characterized in that** the third bearing (32) is mounted so that it can move axially with respect to the shaft (18) from an initial mounting position in which the third bearing (32) collaborates with the first bearing (24) to position the shaft (18) coaxial with the horizontal main axis (A) towards a final position in which the said third bearing (32) is not in contact with the shaft (18).

3. Drive mechanism (10) according to the preceding claim, **characterized in that** the third bearing (32) has a portion (46) which is able to come into contact radially with the cylindrical face (18e) of the shaft (18) when the bearing (32) is in the initial mounting position, so as to position the shaft (18) coaxial with the horizontal main axis, and which is separated from the shaft (18) when the third bearing (32) is in its final position.

4. Drive mechanism (10) according to the preceding claim, **characterized in that** the third bearing (32) comprises an annular section (44) the inside diameter of which is greater than the outside diameter of the cylindrical face of the shaft (18), and comprises a radial ring (46) which projects radially inwards with respect to the annular section (44) and of which the inside diameter of the ring is more or less equal to the outside diameter of the cylindrical face (18e) of the shaft (18).

5. Drive mechanism (10) according to the preceding claim, **characterized in that** the cylindrical face (18e) of the shaft (18) has a radial groove (48), and **in that** the ring (46) of the third bearing (32) is situated axially level with the said groove (48) when the third bearing (32) is in its final position.

6. Drive mechanism (10) according to Claim 4, **characterized in that** the third bearing (32) is situated axially level with an axial front end (18b) of the shaft (18) so that the ring (46) is situated axially forward of the front end of the shaft (18) when the third bearing (32) is in its final position.

7. Drive mechanism (10) according to any one of Claims 2 to 6, **characterized in that** the third bearing (32) and/or the mount (12) comprises means (50) for holding the third bearing (32) in its final position.

8. Method of assembling a drive mechanism (10) according to any one of the preceding claims, comprising a supporting mount (12), a drive motor (14) and guide bearings (24, 26, 32) for guiding the shaft (18) of the drive motor (14) with respect to the mount (12) and with respect to a field frame (16) of the motor (14), **characterized in that** the method comprises:
- a first step of positioning the motor (14) with respect to the mount (12) using the guide bearings (24, 26, 32) such that the shaft (18) of the motor (14) is positioned with respect to the mount (12) coaxial with a longitudinal main axis (A), using two guide bearings (24, 32);
- a step of fixing the field frame (16) of the motor (14) to the mount (12); and
- a step of moving one (32) of the said two bearings (24, 32) so that at the end of the moving step, the shaft (18) is guided with respect to the mount (12) by a first bearing (24) and the shaft (18) is guided with respect to the field frame (16) of the motor (14) by a second bearing (26).

9. Method according to the preceding claim, **characterized in that** the moving step consists in sliding the third bearing (32) axially with respect to the mount (12) and with respect to the shaft (18).

## Patentansprüche

1. Antriebsmechanismus (10) eines Wischerarms, der aufweist:
- einen Trägersockel (12);
- einen auf den Sockel (12) montierten Antriebsmotor (14), der ein Trägergehäuse (16) eines Stators des Motors (14) aufweist, das am Sockel (12) befestigt ist, und eine Antriebswelle (18) aufweist, die um eine insgesamt waagrechte Hauptachse (A) bezüglich des Gehäuses (16) und bezüglich des Sockels (12) drehbeweglich montiert ist;
- Drehführungseinrichtungen der Antriebswelle (18) um die waagrechte Achse (A) bezüglich des Sockels (12) und bezüglich des Gehäuses (16), die ein erstes Führungslager (24) der Welle (18) bezüglich des Sockels (12) und ein zweites Führungslager (26) der Welle (18) bezüglich des Gehäuses (16) aufweisen,
**dadurch gekennzeichnet, dass** die Führungseinrichtungen ein drittes auf den Sockel (12) montiertes Lager (32) aufweisen, das so ausgeführt ist, dass es eine Positionierung der Antriebswelle (18) koaxial zur waagrechten Achse (A) bei der Montage des Motors (14) auf den Sockel (12) erlaubt, und dass das dritte Lager (32) nicht mit der Welle (18) in Kontakt ist, wenn der Motor (14) auf den Sockel (12) montiert ist.

2. Antriebsmechanismus (10) nach dem vorhergehenden Anspruch, **dadurch gekennzeichnet, dass** das dritte Lager (32) bezüglich der Welle (18) von einer Anfangsmontagestellung, in der das dritte Lager (32) mit dem ersten Lager (24) zusammenwirkt, um die Welle (18) koaxial zur waagrechten Hauptachse (A) zu positionieren, in eine Endstellung axial beweglich montiert ist, in der das dritte Lager (32) nicht mit der Welle (18) in Kontakt ist.

3. Antriebsmechanismus (10) nach dem vorhergehenden Anspruch, **dadurch gekennzeichnet, dass** das dritte Lager (32) einen Teil (46) aufweist, der mit der zylindrischen Seite (18e) der Welle (18) radial in Kontakt kommen kann, wenn das Lager (32) in der Anfangsmontagestellung ist, für die Positionierung der Welle (18) koaxial zur waagrechten Hauptachse, und der von der Welle (18) getrennt ist, wenn das dritte Lager (32) in der Endstellung ist.

4. Antriebsmechanismus (10) nach dem vorhergehenden Anspruch, **dadurch gekennzeichnet, dass** das dritte Lager (32) einen ringförmigen Abschnitt (44) aufweist, dessen Innendurchmesser größer als der Außendurchmesser der zylindrischen Seite der Welle (18) ist, und einen radialen Ring (46) aufweist, der bezüglich des ringförmigen Abschnitts (44) radial nach innen vorsteht und dessen Innendurchmesser des Rings insgesamt gleich dem Außendurchmesser der zylindrischen Seite (18e) der Welle (18) ist.

5. Antriebsmechanismus (10) nach dem vorhergehenden Anspruch, **dadurch gekennzeichnet, dass** die zylindrische Seite (18e) der Welle (18) eine radiale Rille (48) aufweist, und dass der Ring (46) des dritten Lagers (32) sich axial im Bereich der Rille (48) befindet, wenn das dritte Lager (32) in der Endstellung ist.

6. Antriebsmechanismus (10) nach Anspruch 4, **dadurch gekennzeichnet, dass** das dritte Lager (32) sich axial im Bereich eines vorderen axialen Endes (18b) der Welle (18) befindet, damit der Ring (46) sich axial vor dem vorderen Ende der Welle (18) befindet, wenn das dritte Lager (32) in der Endstellung ist.

7. Antriebsmechanismus (10) nach einem der Ansprüche 2 bis 6, **dadurch gekennzeichnet, dass** das dritte Lager (32) und/oder der Sockel (12) Einrichtungen (50) für den Halt des dritten Lagers (32) in der Endstellung aufweisen.

8. Verfahren zum Zusammenbau eines Antriebsmechanismus (10) nach einem der vorhergehenden Ansprüche, der einen Trägersockel (12), einen Antriebsmotor (14) und Führungslager (24, 26, 32) der Welle (18) des Antriebsmotors (14) bezüglich des Sockels (12) und bezüglich eines Gehäuses (16) des Motors (14) aufweist, **dadurch gekennzeichnet, dass** das Verfahren aufweist:
- einen ersten Schritt der Positionierung des Motors (14) bezüglich des Sockels (12) mit Hilfe der Führungslager (24, 26, 32), damit die Welle (18) des Motors (14) bezüglich des Sockels (12) mit Hilfe von zwei Führungslagern (24, 32) koaxial zu einer Hauptlängsachse (A) positioniert wird,
- einen Schritt der Befestigung des Gehäuses (16) des Motors (14) am Sockel (12); und
- einen Schritt der Verschiebung des einen (32) der zwei Lager (24, 32), damit am Ende des Verschiebungsschritts die Welle (18) bezüglich des Sockels (12) mit Hilfe eines ersten Lagers (24) geführt wird, und die Welle (18) bezüglich des Gehäuses (16) des Motors (14) mit Hilfe eines zweiten Lagers (26) geführt wird.

9. Verfahren nach dem vorhergehenden Anspruch, **dadurch gekennzeichnet, dass** der Verschiebungsschritt aus einem axialen Gleiten des dritten Lagers (32) bezüglich des Sockels (12) und bezüglich der Welle (18) besteht.
